# EUROPÄISCHE PATENTSCHRIFT

(11) **EP 2 116 655 B1**
(45) Veröffentlichungstag und Bekanntmachung des Hinweises auf die Patenterteilung: **02.01.2013**
(21) Anmeldenummer: 09159413.5
(22) Anmeldetag: 05.05.2009
(51) Int. Cl.: E03C 1/05, G05D 23/13

(54) **Elektronisch gesteuerte Armatur**
Electronically controlled faucet
Robinet à contrôle électronique

(30) Priorität: 09.05.2008 DE 202008006405 U
(43) Veröffentlichungstag der Anmeldung: 11.11.2009
(73) Patentinhaber: Pohl, Achim, 64342 Seeheim-Jugenheim (DE); Fiegl, Tomas, 64293 Darmstadt (DE)
(72) Erfinder: Pohl, Achim, 64342 Seeheim-Jugenheim (DE); Fiegl, Tomas, 64293 Darmstadt (DE)
(74) Vertreter: Cohausz & Florack

(56) Entgegenhaltungen:
- EP-A1- 1 362 960
- EP-A2- 0 299 696
- WO-A1-89/09956
- WO-A1-2006/061657
- WO-A2-2007/034324
- WO-A2-2007/124438
- US-B1- 6 438 770

## Beschreibung

Die Erfindung betrifft eine Armatur, insbesondere Waschtisch- oder Badewannenarmatur, nach dem Oberbegriff des Anspruchs 1.

Im Sanitär- und Küchenbereich sind seit vielen Jahren Einhand-Mischarmaturen zur Abgabe von Wasser bekannt, mit denen sich manuell der Volumenstrom und gleichzeitig die Temperatur des abgegebenen Wassers einstellen lassen.

In der DE 101 49 729 C2 ist ein Funktions- und Verkleidungselement zum Betätigen von herstellerspezifischen Auslösern von Spülkästen in Vorwandinstallation beschrieben, das eine an der Vorwand raumseitig anzuordnende Betätigungseinrichtung aufweist, die mit einem Auslösemechanismus für Spülwasser in Verbindung steht. Es sind dort verschiedene Ausgestaltungen des Funktions- und Verkleidungselements angegeben. Unter anderem ist vorgesehen, dass die Betätigungseinrichtung als "touch-screen", d.h. als berührungssensitiver Bildschirm ausgebildet ist.

In der DE 200 19 895 U1 ist eine Waschtischarmatur vorgeschlagen, die mit elektrisch ansteuerbaren Dosiermitteln zur Einstellung wenigstens eines Dosierparameters, insbesondere der Durchflussmenge an Wasser pro Zeiteinheit sowie der Wassertemperatur, und mit Steuermitteln zur Ansteuerung der Dosiermittel versehen ist. An den Steuermitteln ist eine Einrichtung zur Eingabe von Sprachbefehlen angeschlossen, wobei die Steuermittel Sprachbefehle, die von einem Benutzer über die Spracheingabeeinrichtung eingegeben werden, in elektrische Steuersignale zur Ansteuerung der Dosiermittel umsetzen, so dass die Waschtischarmatur sprachsteuerbar ist. Zur manuellen Eingabe von Dosierparametern oder Steuerbefehlen zur Programmierung der Steuermittel ist eine zusätzliche Eingabeeinrichtung vorgesehen, die als so genannter "Touchscreen" ausgebildet und über eine Datenleitung mit den Steuermitteln verbunden ist.

Des Weiteren ist aus der EP 0 299 696 A2 eine Armatur zur Abgabe von Wasser bekannt, die mit einer elektronischen Steuervorrichtung zur Steuerung einer ein Kaltwasser- und ein Warmwasser-Ventil umfassenden Mischvorrichtung versehen ist. Die Armatur ist zudem mit einem berührungssensitiven Bildschirm versehen, der derart ausgebildet ist, dass sich durch punktuelle Berührungen verschiedener Bereiche seiner Oberfläche die Temperatur und der Volumenstrom des abzugebenden Wassers gleichzeitig einstellen lassen. Die eingestellte Parameterkombination wird dabei durch Beleuchtung von entsprechenden Werten auf Werteskalen angezeigt, die entlang zweier Ränder des Bildschirms angeordnet sind. Ferner ist eine grafische Darstellung der eingestellten Parameterkombination auf dem Bildschirm vorgesehen, bei der die Istwerte und die Sollwerte jeweils als leuchtende Gitterpunkte angezeigt werden.

Ferner ist in der WO 89/09956 A1, dei dem nächstliegenden Stand der Technik zeigt, eine elektronisch gesteuerte Temperatur- und Durchflussmischvorrichtung beschrieben, die ein Tastenfeld mit einem dazugehörigen Anzeigefeld aufweist, das dem Benutzer signalisiert, welcher Kontaktpunkt des Tastenfeld betätigt wurde. Jedem Kontaktpunkt ist dabei eine bestimmte Temperatur und eine bestimmte Durchflussmenge zugeordnet und es lassen sich zeilen- oder matrixförmige Tastenkennfelder für die verschiedenen Betriebspunkte von Temperatur und Durchfluss aufbauen. Alle drei Kennfelder für Anzeige, Temperatur und Durchfluss sind in einem Tastenfeld zusammengefasst, wodurch das Einstellen und Ändern der Temperatur und des Durchflusses in kurzer Zeit durchführbar ist. Das Anzeigefeld ist dabei unterhalb oder neben dem Tastenfeld angeordnet. Ist das Anzeigefeld unterhalb des Tastenfeldes angeordnet, so weist das Anzeigefeld beispielsweise Leuchtdioden auf, die unter den Gitterpunkten des Tastenfeldes angeordnet sind. Vorzugsweise sind genauso viele Leuchtdioden wie Gitterpunkte vorgesehen. Zur Erkennung des Anzeigefeldes ist das Tastenfeld transparent ausgebildet. Ferner handelt es sich bei dem Tastenfeld vorzugsweise um eine Folientastatur, die in jedem Gitterpunkt zwei zusammengehörige rechteckige Symbole aufweist, welche die Durchflussmenge und die Mischungsanteile des aus dem Auslass austretenden Wassers kennzeichnen. Geschwärzte Rechtecke symbolisieren dabei beispielsweise den Warmwasseranteil und nichtgeschwärzten Rechtecke den Kaltwasseranteil. Ferner sind die Rechtecke unterschiedlich breit bzw. schmal ausgeführt, um unterschiedliche Durchflussmengen zu kennzeichnen, wobei eine Verringerung der Durchflussmenge symbolhaft durch schmaler werdende Rechtecke dargestellt ist.

Der vorliegenden Erfindung liegt die Aufgabe zugrunde, eine elektronisch gesteuerte Armatur der eingangs genannten Art zu schaffen, die eine schnelle visuelle Erfassbarkeit der eingestellten Soll-Temperatur sowie der gleichzeitig eingestellten Wasserabgabemenge bietet.

Gelöst wird diese Aufgabe durch eine Armatur mit den Merkmalen des Anspruchs 1.

Die erfindungsgemäße Armatur umfasst eine elektronische Steuervorrichtung zur Steuerung einer Mischvorrichtung zur Mischung von kaltem Wasser und warmem Wasser und eine aus einer berührungssensitiven und/oder mit Näherungsschaltern versehenen Platte gebildete Bedienvorrichtung zur Bedienung der Steuervorrichtung, wobei die Platte derart ausgebildet ist, dass sich durch eine auf ihrer Oberfläche ausgeführte Streichbewegung zumindest ein Temperaturparameter und ein Abgabemengenparameter gleichzeitig einstellen lassen. Die Platte ist aus einem berührungssensitiven und/oder mit Näherungsschaltern versehenen Bildschirm gebildet, der bei Berührung seiner Oberfläche ein Symbol anzeigt, dessen Farbe sich in Abhängigkeit der eingestellten Soll-Temperatur und dessen Größe und/oder Form sich in Abhängigkeit der eingestellten Wasserabgabemenge bei einer Verschiebung des Symbols auf dem Bildschirm ändert.

Vorzugsweise hat das Symbol bei kaltem Wasser eine blaue Farbe, während es bei warmem oder heißem Wasser rot erscheint. Der Nutzer der erfindungsgemäßen Armatur erhält so eine leicht verständliche Rückmeldung über die vorliegende bzw. vorgenommene Temperatureinstellung.

Erfindungsgemäß weist das Symbol die Form eines Kreisringes auf, wobei die Ringdicke und/oder der Ringdurchmesser mit zunehmender Wasserabgabemenge (Durchflussmenge) größer werden.

Weitere bevorzugte und vorteilhafte Ausgestaltungen der erfindungsgemäßen Armatur sind in den Unteransprüchen angegeben.

Nachfolgend wird die Erfindung anhand einer Ausführungsbeispiele darstellenden Zeichnung näher erläutert. Es zeigen in schematischer Darstellung:
- Figur 1: ein Blockschaltbild einer Armatur mit einer eine berührungssensitive Platte aufweisenden Bedienvorrichtung; und
- Figuren 2 bis 6: ein Ausführungsbeispiel einer Bedienvorrichtung einer erfindungsgemäßen Armatur in Vorderansicht.

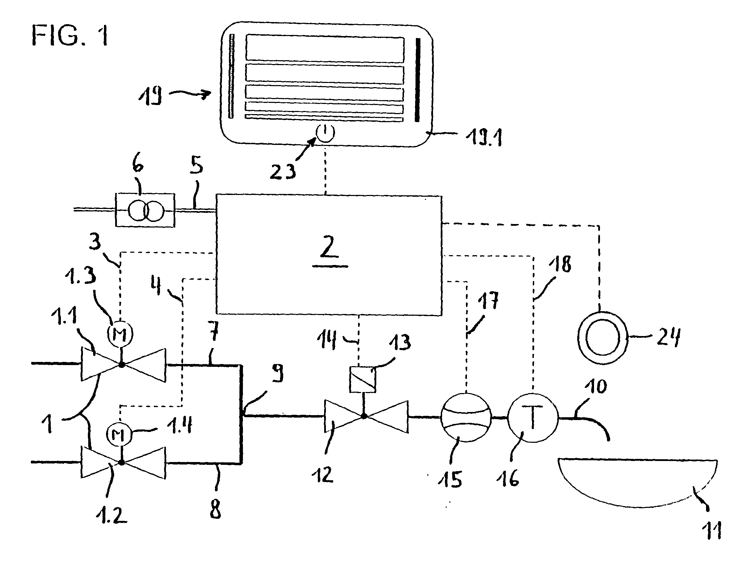

Bei der in Fig. 1 dargestellten Armatur handelt es sich um eine elektronisch gesteuerte Armatur zur Abgabe von Wasser, die beispielsweise als Waschtisch-, Badewannen-, Dusch- oder Küchenspülenarmatur verwendet werden kann.

Die Armatur ist mit einer Mischvorrichtung 1 zur Mischung von kaltem Wasser und warmem Wasser und einer elektronischen Steuervorrichtung 2 zur Steuerung der Mischvorrichtung versehen.

Die Mischvorrichtung 1 umfasst ein Wasserventil 1.1 für Kaltwasser und ein Wasserventil 1.2 für Warmwasser. Die Wasserventile 1.1, 1.2 können jeweils stufenlos von einer Absperrstellung in eine Ofenstellung geöffnet bzw. umgekehrt stufenlos geschlossen werden. Sie sind jeweils mit einem elektrischen Stellantrieb 1.3, 1.4, beispielsweise einem elektrischen Motor versehen, der über eine Steuerleitung 3, 4 von der elektronischen Steuervorrichtung 2 ansteuerbar ist.

Die Stellantriebe 1.3, 1.4 sowie die Steuervorrichtung 2 arbeiten mit Niederspannung. Sie sind beispielsweise für einen Betrieb mit 9 Volt ausgebildet. Die Steuervorrichtung 2 ist über eine Stromversorgungsleitung 5 mit einem 230-Volt-Transformator 6 verbunden.

An den stufenlos einstellbaren Wasserventilen 1.1, 1.2 sind Wasserleitungen 7, 8 angeschlossen, die über ein T-Verbindungsstück 9 an einer Zulaufleitung 10 angeschlossen sind. Die Zulaufleitung 10 mündet beispielsweise oberhalb eines Waschbeckens 11 oder einer Badewanne. In der Zulaufleitung 10 ist ein Absperrventil 12 integriert, das mit einem elektromagnetischen Stellantrieb 13 versehen ist, der wiederum über eine Steuerleitung 14 von der elektronischen Steuervorrichtung 2 ansteuerbar ist.

Ferner sind in der Zulaufleitung 10 eine Durchflussmengen-Messvorrichtung (Volumenstrommesser) 15 und ein Temperatursensor 16 zur Erfassung der Wassertemperatur integriert. Die Durchflussmengen-Messvorrichtung 15 und der Temperatursensor 16 sind über Signalleitungen 17, 18 mit der elektronischen Steuervorrichtung 2 verbunden.

Die Bedienung der Steuervorrichtung 2 erfolgt mittels einer Bedienvorrichtung 19, die eine berührungssensitive Platte 19.1 aufweist. Sie ist derart ausgebildet, dass sich durch eine auf ihrer Oberfläche ausgeführte manuelle Streichbewegung außer einer Soll-Temperatur des abzugebenden Wassers gleichzeitig die pro Zeiteinheit abzugebende Wassermenge einstellen lässt.

Die berührungssensitive Platte 19.1 weist einen Oberflächenbereich 23 auf, der einen Ein-Ausschalter definiert. Bei Berührung dieses Oberflächenbereichs 23 wird der elektromagnetische Stellantrieb 13 des Absperrventils 12 aktiviert, so dass das Absperrventil 12 öffnet oder schließt, je nach dem in welchem Zustand sich das Absperrventil 12 gerade befindet.

Mittels der Durchflussmengen-Messvorrichtung 15 und dem Temperatursensor 16 werden der Istwert der abgegebenen Wassermenge bzw. der Istwert der Temperatur des abgegebenen Wassers erfasst und in der Steuervorrichtung 2 mit den über die Bedienvorrichtung 19 eingestellten zugehörigen Sollwerten verglichen. Liegt zwischen den Istwerten und den eingestellten Sollwerten eine Abweichung vor, die einen vorgegebenen oder vorgebbaren Betrag überschreitet, so steuert die Steuervorrichtung 2 die Stellantriebe 1.3, 1.4 der Wasserventile 1.1, 1.2 in der Weise an, dass die Abweichung entsprechend verringert und schließlich in einem zulässigen Toleranzbereich liegt.

Nach einer bevorzugten Ausgestaltung der Erfindung ist vorgesehen, dass die Steuervorrichtung 2 bei einer Öffnung des Absperrventils 12 durch Berührung des Oberflächenbereichs (Ein-Ausschalters) 23 der Bedienvorrichtung 19 die Stellantriebe 1.3, 1.4 der Wasserventile 1.1, 1.2 gemäß einer vorgegebenen oder vorgebbaren Standardeinstellung ansteuert, so dass die pro Zeiteinheit abgegebene Wassermenge und die Wassertemperatur dann dieser Standardeinstellung entsprechen. Die Standardeinstellung kann beispielsweise eine zwischen dem einstellbaren Maximalwert und dem einstellbaren Minimalwert liegende mittlere Wassermenge (Durchflussmenge) und eine mittlere Wassertemperatur von ca. 20 °C vorgeben.

Nach einer weiteren bevorzugten Ausgestaltung ist vorgesehen, dass die erfindungsgemäße Armatur mit einem Näherungs- oder Tastschalter 24 zum Öffnen des elektromagnetischen Absperrventils 12 versehen ist. Der berührungssensitive Oberflächenbereich (Ein-Ausschalter) 23 der Bedienvorrichtung 19 dient in diesem Fall lediglich der Aktivierung eines Einstellmodus, in dem Sollwerte für die Wassertemperatur und die pro Zeiteinheit abzugebende Wassermenge eingestellt werden können.

Es liegt im Rahmen der Erfindung, die Bedienvorrichtung 19 bzw. die hinter der Platte 19.1 angeordnete Auslösetechnik (Elektronik) so auszubilden, dass diese eine stufenlose Einstellung der Parameter Wassermenge pro Zeiteinheit sowie Wassertemperatur ermöglicht.

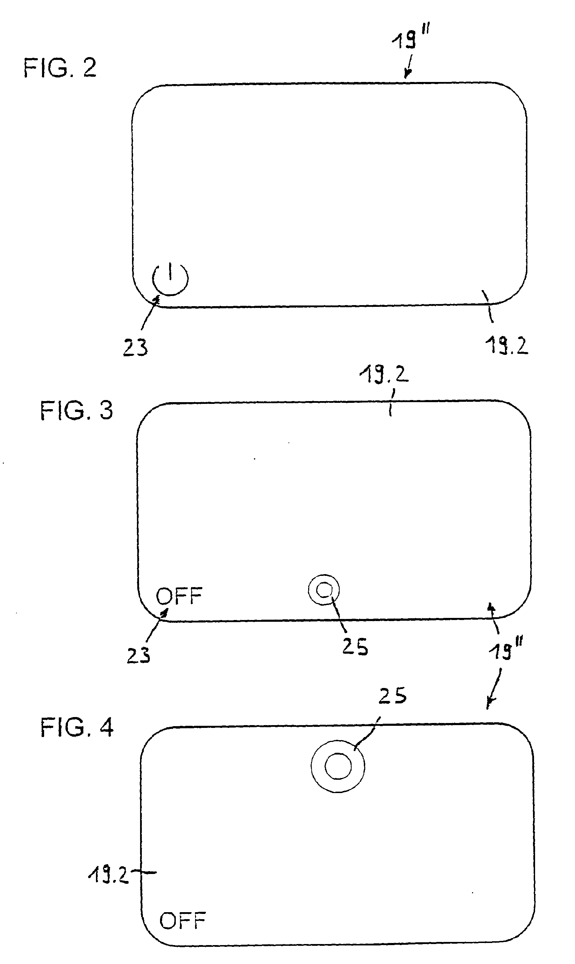

Die in den Figuren 2 bis 6 dargestellte Bedienvorrichtung 19" ist aus einem berührungssensitiven Bildschirm 19.2 gebildet. Der Bildschirm 19.2 weist einen berührungssensitiven Oberflächenbereich 23 auf, der einen Ein-Ausschalter definiert. In dem in Fig. 2 dargestellten Funktionsbereitschaftsmodus zeigt der Oberflächenbereich 23 an, dass die Bedienvorrichtung 19" durch Berührung derselben eingeschaltet werden kann.

Bei Berührung des Oberflächenbereiches 23 ändert sich das angezeigte Bild. Der Einschalt-Zustand wird insbesondere durch eine Stellmarke 25 angezeigt. Zudem zeigt die Bedienvorrichtung 19" durch das Symbol "OFF" an, dass sie durch Berührung dieses Oberflächenbereichs 23 in den Funktionsbereitschaftsmodus geschaltet werden kann.

Durch Berühren und Verschieben der Stellmarke 25 auf dem Bildschirm 19.2 kann der Benutzer der Bedienvorrichtung 19" die pro Zeiteinheit abzugebende Wassermenge und gleichzeitig die Wassertemperatur des abzugebenden Wassers einstellen.

Die Stellmarke 25 ändert dabei ihre Größe bzw. ihren Flächeninhalt in Abhängigkeit der eingestellten Wasserabgabemenge sowie ihre Farbe in Abhängigkeit der eingestellten Soll-Temperatur.

Ein Vergleich der Figuren 3 und 4 verdeutlicht, dass ein Benutzer der Bedienvorrichtung 19" bei einer Verschiebung der angezeigten Stellmarke 25 von unten nach oben durch die damit einhergehende Größenzunahme der Stellmarke 25 die optische Rückmeldung erhält, dass er die pro Zeiteinheit abzugebende Wassermenge auf einen höheren Sollwert eingestellt hat.

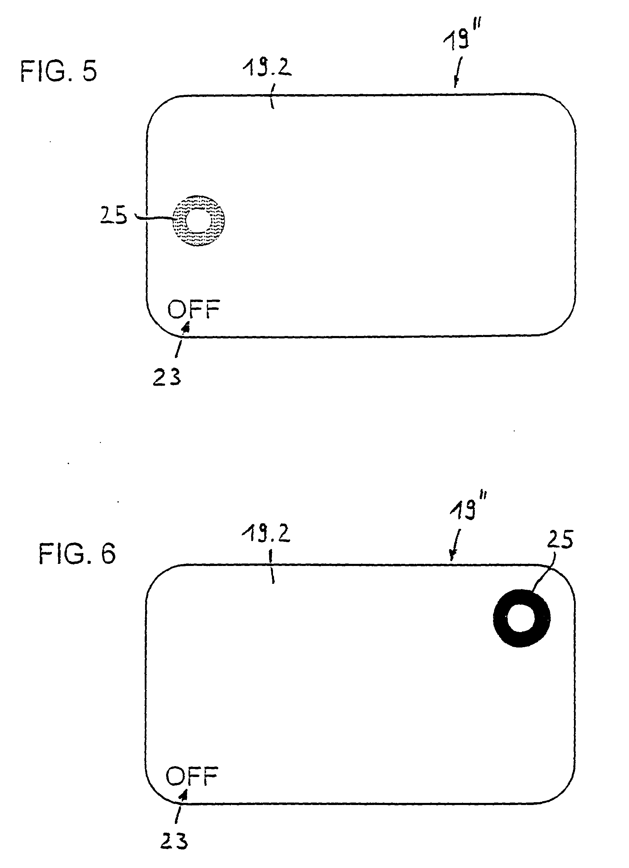

In den Figuren 5 und 6 ist zudem dargestellt, dass sich die Farbe bzw. das Muster der angezeigten Stellmarke 25 bei ihrer Verschiebung auf dem Bildschirm 19.2 von links nach rechts und umgekehrt ändert. In Fig. 5 ist eine Temperatur-Wassermengen-Einstellung skizziert, bei der die Armatur gemäß Fig. 1 bei geöffnetem Absperrventil 12 kaltes Wasser mit mittlerem Volumenstrom abgibt. Dagegen stellt Fig. 6 eine Temperatur-Wassermengen-Einstellung dar, bei der die Armatur gemäß Fig. 1 bei geöffnetem Absperrventil 12 warmes oder heißes Wasser mit maximaler Durchflussmenge abgibt. Bei der Einstellung gemäß Fig. 5 leuchtet die Stellmarke 25 vorzugsweise in blauer Farbe, während sie bei der Einstellung gemäß Fig. 6 vorzugsweise in roter Farbe leuchtet.

Die (ringförmige) Stellmarke 25 ist somit ein Symbol, das die eingestellte Temperatur und gleichzeitig die eingestellte Durchflussmenge qualitativ anzeigt.

Eine weitere bevorzugte, in der Zeichnung nicht besonders dargestellte Ausgestaltung der Erfindung sieht vor, dass die Steuervorrichtung mindestens einen Speicher umfasst, in dem benutzerbezogene Einstellungen speicherbar sind. Die Bedienvorrichtung umfasst in diesem Fall eine Tastatur bzw. eine auf dem berührungssensitiven Bildschirm erscheinende Tastatur, über die ein Benutzer eine oder mehrere persönlich bevorzugte Parametereinstellungen, insbesondere Wassertemperatur-Wasservolumenstrom-Einstellungen, in dem Speicher der Steuervorrichtung hinterlegen und bei entsprechendem Wunsch aufrufen kann. Den personenbezogenen Parametereinstellungen können dabei personalisierte Tasten bzw. Tastenfelder zugeordnet werden, die durch entsprechenden Tastenbefehl auf dem Bildschirm sichtbar gemacht und durch Berührung aktiviert oder betätigt werden können.

Die Eingabe bzw. Einstellung von benutzerbezogenen Parametern kann alternativ oder ergänzend auch durch berührungslose Bewegungen vor der Oberfläche der mit Näherungsschaltern versehenen Platte der Bedienvorrichtung durchgeführt werden. In diesem Fall ist die erfindungsgemäße Armatur somit in der Lage, eine Gestik eines Benutzers, d.h. abstandsorientierte Befehle bzw. Bewegungsmuster zu erfassen.

Die Ausführung der Erfindung ist nicht auf die vorstehend beschriebenen Ausführungsbeispiele beschränkt. Vielmehr sind zahlreiche Varianten möglich, die auch bei abweichender Gestaltung von der in den beiliegenden Ansprüchen angegebenen Erfindung Gebrauch machen. So liegt es auch im Rahmen der Erfindung, mit der Bedienvorrichtung der Armatur außer der Wassertemperatur gleichzeitig einen anderen Parameter, beispielsweise die Abgabemenge eines Duftstoffes in Badewasser, einzustellen.

Die Ausführung der Erfindung ist insbesondere nicht auf die Verwendung von berührungssensitiven Bildschirmen zur gleichzeitigen Einstellung von Wassertemperatur und Wasserabgabemenge beschränkt. Vielmehr umfasst die Erfindung auch Ausgestaltungen, bei denen die Bedienvorrichtung der erfindungsgemäßen Armatur aus einem mit Näherungssensoren versehenen Bildschirm gebildet ist, um durch eine berührungslose Bewegung vor dem Bildschirm die Wassertemperatur und gleichzeitig die Wasserabgabemenge einzustellen. Die Näherungssensoren können dabei beispielsweise als optische und/oder als kapazitive Näherungssensoren (Näherungsschalter) ausgebildet sein. Die Bedienvorrichtung der erfindungsgemäßen Armatur ist somit imstande, Bewegungen bzw. Gestik als abstandsorientierte Befehle und Bewegungsmuster zu erfassen. Die Armatur ist auch bei dieser Ausgestaltung mit einem Bildschirm ausgestattet, auf dem die abstandsorientierten Befehle und/oder Bewegungsmuster angezeigt werden.

## Patentansprüche

1. Armatur, insbesondere Waschtisch- oder Badewannenarmatur, umfassend eine elektronische Steuervorrichtung (2) zur Steuerung einer Mischvorrichtung (1) zur Mischung von kaltem Wasser und warmem Wasser und eine aus einer berührungssensitiven und/oder mit Näherungsschaltern versehenen Platte (19.2) gebildete Bedienvorrichtung (19") zur Bedienung der Steuervorrichtung (2), wobei die Platte (19.2) derart ausgebildet ist, dass sich durch eine auf ihrer Oberfläche ausgeführte Streichbewegung zumindest ein Temperaturparameter und ein Abgabemengenparameter gleichzeitig einstellen lassen, wobei die Platte aus einem berührungssensitiven und/oder mit Näherungsschaltern versehenen Bildschirm (19.2) gebildet ist, und wobei der Bildschirm (19.2) bei Berührung seiner Oberfläche ein eine Stellmarke darstellendes Symbol (25) anzeigt, dessen Farbe sich in Abhängigkeit der eingestellten Soll-Temperatur und dessen Größe und/oder Form sich in Abhängigkeit der eingestellten Wasserabgabemenge bei einer Verschiebung des Symbols (25) auf dem Bildschirm (19.2) ändert, **dadurch gekennzeichnet, dass** das Symbol die Form eines Kreissmiges aufweist, wobei dei Ringdicke und/oder der Ringdurchmesser mit zunehmender Wasserabgabemenge größer werden.

2. Armatur nach Anspruch 1,
**dadurch gekennzeichnet, dass** der Bildschirm (19.2) mindestens einen Oberflächenbereich (23) aufweist, der einen Ein-Ausschalter definiert.

3. Armatur nach Anspruch 2,
**dadurch gekennzeichnet, dass** der Oberflächenbereich (23) den jeweils schaltbaren Zustand des Ein-Ausschalters anzeigt.

4. Armatur nach einem der Ansprüche 1 bis 3,
**dadurch gekennzeichnet, dass** die Steuervorrichtung (2) mit einem Tast- oder Näherungsschalter (24) zum Öffnen eines elektromagnetischen Absperrventils (12) versehen ist.

5. Armatur nach einem der Ansprüche 1 bis 4,
**dadurch gekennzeichnet, dass** die Steuervorrichtung (2) mindestens einen Speicher umfasst, in dem benutzerbezogene Einstellungen speicherbar sind, wobei die Bedienvorrichtung (19") eine Tastatur oder eine auf einem berührungssensitiven Bildschirm (19.2) erscheinende Tastatur umfasst, über die ein Benutzer eine oder mehrere persönlich bevorzugte Parametereinstellungen, insbesondere Wassertemperatur-Wasservolumenstrom-Einstellungen in dem Speicher der Steuervorrichtung (2) hinterlegen und bei Bedarf oder entsprechendem Wunsch aufrufen kann.

6. Armatur nach Anspruch 5,
**dadurch gekennzeichnet, dass** den personenbezogenen Parametereinstellungen personalisierte Tasten und/oder Tastenfelder zugeordnet sind, die durch Tastenbefehl auf dem Bildschirm (19.2) sichtbar gemacht und durch Berührung aktiviert oder betätigt werden können.

## Claims

1. A faucet, in particular a washstand or bathtub faucet comprising an electronic control device (2) for controlling a mixing device (1) for mixing cold water and warm water, and an operating device (19"), which is formed by a plate (19.2) which is contact-sensitive and/or which is provided with proximity switches, for operating the control device (2), wherein the plate (19.2) is embodied in such a manner that at least a temperature parameter and a dispensing parameter can be set at the same time by means of a sweeping motion, which is executed on the surface of said plate, wherein the plate is formed by a screen (19.2), which is contact-sensitive and/or which is provided with proximity switches, and wherein the screen (19.2) when touching its surface displays a symbol (25) representing a code marker, the color of which changes as a function of the set target temperature and the size and/or form of which changes as a function of the set water dispensing quantity when displacing the symbol (25) on the screen (19.2), **characterized in that** the symbol has the shape of a circular ring, wherein the ring thickness and/or the ring diameter become larger with an increasing water dispensing quantity.

2. The faucet according claim 1, **characterized in that** the screen (19.2) encompasses at least one surface area (23), which defines an on-off switch.

3. The faucet according to claim 2,
**characterized in that** the surface area (23) displays the respectively switchable state of the on-off switch.

4. The faucet according to one of claims 1 to 3,
**characterized in that** the control device (2) is provided with a push-button or proximity switch (24) for opening an electromagnetic shut-off valve (12).

5. The faucet according to one of claims 1 to 4,
**characterized in that** the control device (2) comprises at least one storage, in which the user-related settings can be stored, wherein the operating device (19") comprises a key pad or a key pad appearing on a contact-sensitive screen (19.2), via which a user can store and recall, if desired, one or a plurality of personally preferred parameter settings, in particular water temperature/water volume flow rate settings, in the storage of the control device (2).

6. The faucet according to claim 5,
**characterized in that** personalized push-buttons and/or keypads, respectively, which are made visible on the screen (19.2) by means of a push-button command and which can be activated or operated by touch, can thereby be assigned to the personal parameter settings.

## Revendications

1. Robinet, en particulier un robinet de lavabo ou de baignoire, qui comprend un dispositif de commande électronique (2) pour la commande d'un dispositif mélangeur (1) pour le mélange d'eau froide et d'eau chaude, et un dispositif d'actionnement (19") réalisé en forme de plaque (19.2) tactile et / ou pourvue de détecteurs de proximité pour l'actionnement du dispositif de commande (2), sachant que la plaque (19.2) est conçue de sorte qu'au moins un paramètre de température et un paramètre de quantité délivrée puissent être réglés simultanément par un effleurement de sa surface, sachant que la plaque est constituée d'un écran de visualisation (19.2) tactile et / ou est pourvue de commutateurs détecteurs de proximité, et sachant que, lors de l'effleurement de sa surface, l'écran de visualisation (19.2) affiche un symbole, qui représente une marque de réglage et dont la couleur change en fonction de la température prescrite réglée et dont la grandeur et / ou la forme change en fonction de la quantité d'eau réglée, avec un déplacement du symbole (25) sur l'écran de visualisation (19.2), **caractérisé en ce que** le symbole présente la forme d'un anneau, l'épaisseur de l'anneau et / ou le diamètre de l'anneau augmentant en fonction de l'augmentation de la quantité d'eau délivrée.

2. Robinet selon la revendication 1, **caractérisé en ce que** l'écran de visualisation (19.2) est doté d'au moins une zone de surface (23), qui définit un commutateur marche /arrêt.

3. Robinet selon la revendication 2, **caractérisé en ce que** la zone de surface (23) indique chaque fois la condition réglable du commutateur marche / arrêt.

4. Robinet selon l'une des revendications 1 à 3, **caractérisé en ce que** le dispositif de commande (2) est doté d'un commutateur à effleurement ou détecteur de proximité (24) pour l'ouverture d'une soupape d'obturation électromagnétique (12).

5. Robinet selon l'une des revendications 1 à 4, **caractérisé en ce que** le dispositif de commande (2) est doté d'au moins une mémoire, dans laquelle les réglages relatifs aux utilisateurs peuvent être mémorisés, sachant que le dispositif d'actionnement (19") est dote d'un clavier ou d'un clavier affiché sur un écran de visualisation (19.2) tactile, par l'intermédiaire de laquelle un utilisateur peut déposer dans la mémoire du dispositif de commande (2) un ou plusieurs réglages de paramètres préférentiels, personnels, en particulier des réglages de la température et du volume d'eau, et les appeler selon les besoins ou désirs.

6. Robinet selon la revendication 5, **caractérisé en ce que** des touches et / ou des pavés de touches, qui peuvent être affichés sur l'écran de visualisation (19.2) par ordre, donné au moyen de touches, et activés ou actionnés par effleurement, sont associés aux réglages de paramètres personnels.
